# EUROPEAN PATENT SPECIFICATION

(11) **EP 1 515 549 B1**
(45) Date of publication and mention of the grant of the patent: **17.10.2007**
(21) Application number: 04254839.6
(22) Date of filing: 12.08.2004
(51) Int. Cl.: H04N 5/445

(54) **Apparatus and method for sharing recommended programs using digital set-top boxes**
Vorrichtung und Verfahren zur Verteilung von Programmempfehlungen mittels digitaler Set-Top Boxen
Dispositif et procédé pour le partege de recommandations de programmes par set-top boxes numeriques

(30) Priority: 09.09.2003 KR 2003063351
(43) Date of publication of application: 16.03.2005
(73) Proprietor: SAMSUNG ELECTRONICS CO., LTD., Suwon-si, Gyeonggi-do (KR)
(72) Inventor: Lee, Jung-bong, Seoul (KR); Park, Hyun-mi, Seoul (KR)
(74) Representative: Brandon, Paul Laurence

(56) References cited:
- WO-A-01/49031
- WO-A-01/50309

## Description

The present invention relates to apparatus and methods for sharing recommended program information using digital set-top boxes.

Generally, in digital broadcasting based on the MPEG standard, broadcasting programs corresponding to a plurality of channels are multiplexed and transmitted on a bit stream, and a broadcasting program signal corresponding to a channel which a user wishes to watch is separated from the transmitted bit stream, decoded and displayed on a television screen. In such a digital broadcasting, an electronic program guide (EPG) for the broadcasting programs in each channel or time is transmitted together with the bit stream, so that the user can easily search for his or her favourite broadcasting programs using the EPG.

Since the EPG includes information on time and titles of the broadcasting programs and detailed information on the corresponding broadcasting programs, the user can search for program information of his or her desired programs using the EPG which is displayed on the television screen.

Also, since it is possible to carry out a bi-directional communication function of the Internet by making a connection to a digital television, providing an Internet connection through a television is becoming widely used as Internet communication technology becomes more common.

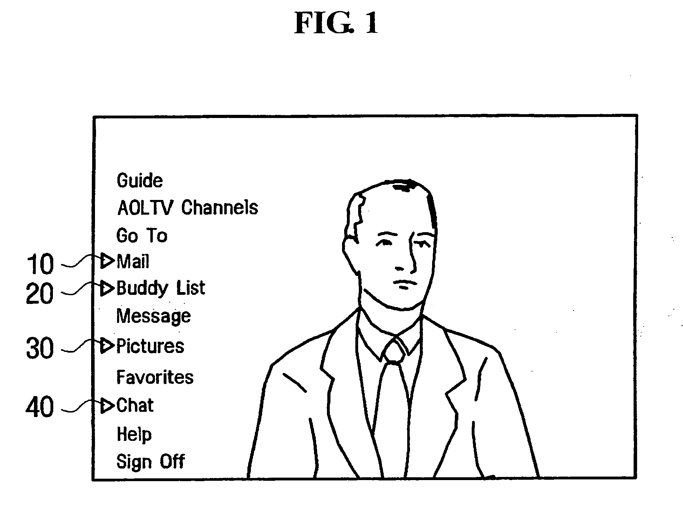

That is, as shown in Fig. 1, the user can use additional functions together with the EPG, such as mail 10, buddy list 20 for transmitting messages within a desired user community, moving picture watching 30, and chatting 40 while watching the broadcasting programs.

On the other hand, as cable or satellite broadcasting is generalized, the number of channels which the user can watch, is increased and then the time required to search for broadcasting programs being broadcasted on the channels preferred by the user is also increased, so that the cable or satellite broadcasting program provider includes recommended program information in the EPG.

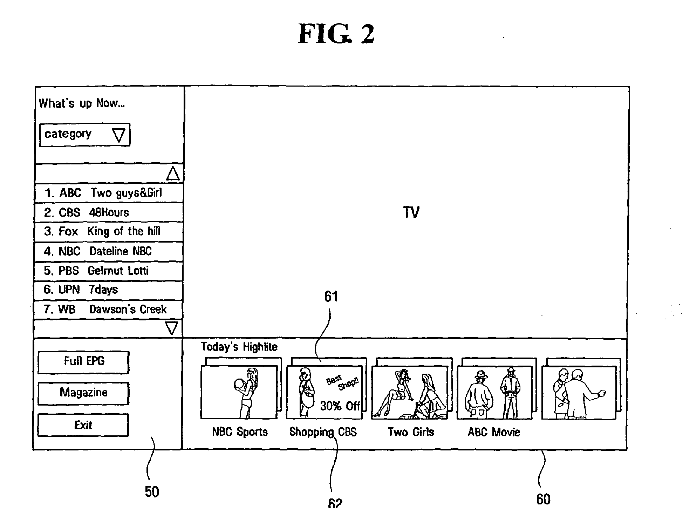

For example, referring to Fig. 2, recommended program information 60 is displayed on one side of an existing EPG 50.

WO-A-01/49031 discloses an apparatus and method thereof for communicating a scramble key (for descrambling scrambled digital signals) and service information (used in an electronic programming guide) to an intelligent transceiver (e.g., a set-top box) (450a, b, c, d, e) using a bi-directional digital broadcast system (400). The intelligent transceiver (450a, b, c, d, e) includes an in-band tuner adapted to receive from the digital broadcast system (400) in-band digital signals comprising audio content and video content. The intelligent transceiver (450a, b, c, d, e) also includes a second tuner adapted to send and receive a scramble key over the World Wide Web via a cable modem. In one embodiment, the in-band digital signals received by the in-band tuner also contain service information. In another embodiment, the digital signals received by the second tuner via the cable modem also contain service information.

WO-A-01/50309 discloses a method of informing a first network user of activity by other network users includes receiving information identifying television programming viewed by at least one other network user and displaying the information to the first network user on a user interface.

Currently, the recommended program information 60 includes a still cut 61 and a program name 62 for the corresponding program, so that the user can carry out reservation recording and alarm recording using the recommended program information 60.

However, since such information on the recommended programs is displayed regardless of a user's preference, the user has to view the programs included in the recommended program information even when there is no desired program for the user in the recommended program information, and therefore the user is inconvenienced.

An apparatus and method consistent with preferred embodiments of the present invention provide sharing of recommended program information using digital set-top boxes by allowing broadcasting programs to be recommended among a plurality of set-top boxes connected with one another through a desired network, so that broadcasting programs according to the user's preferences can be recommended to one another.

According to the invention in a first aspect, there is provided an apparatus for sharing recommended programs, comprising a transmission-side set-top box for transmitting recommended program information for broadcasting programs to be recommended; a server for being connected to a plurality of set-top boxes through a network and storing recommended program information transmitted from the transmission-side set-top box; and a reception-side set-top box for receiving recommended program information stored in the server and displaying the information on a screen. Characterised in that the server generates a set-top box list including a plurality of set-top boxes connected with one another through a network and transmits the list to the plurality of set-top boxes; wherein the server calculates a recommended frequency for each program using the recommended program information, and generates additional recommended program information in accordance with the calculated results; and wherein the reception-side set-top box sorts programs to be received, and the server transmits the recommended program information matched to the sorting.

According to the present invention in a second aspect, there is provided a method for sharing recommended programs, comprising transmitting recommended program information for programs to be recommended to an arbitrary set-top box, storing the recommended program information which has been transmitted, and receiving the recommended program information which has been stored and displaying the information on a screen. characterised in that receiving a set-top box list including a plurality of set-top boxes connected with one another through a network; selecting a desired receiving set-top box using the set-top box list; and wherein storing recommended program information includes calculating a recommended frequency for each program using the recommended program information and generating separate recommended program information in accordance with the calculated results; and wherein receiving recommended program information includes sorting programs to be received.

Further features of the present invention are set out in the appended claims.

The present invention will become more apparent by the following description of the illustrative, non-limiting embodiments thereof with reference to the accompanying drawings, in which:
Fig. 1 illustrates a menu for interactive communication while a broadcasting program is being displayed;
Fig. 2 illustrates an EPG including recommended program information;
Fig. 3 is a block diagram of an apparatus for sharing recommended programs using a digital set-top box according to an exemplary embodiment of the present invention;
Fig. 4 is a flowchart of a method for transmitting recommended program information using a digital set-top box according to an exemplary embodiment of the present invention;
Figs. 5a and 5b illustrate a screen for selecting a set-top box to which recommended program information is transmitted according to an exemplary embodiment of the present invention;
Figs. 6a and 6b illustrate a screen for selecting a set-top box to which recommended program information is transmitted using an EPG according to an exemplary embodiment of the present invention;
Fig. 7 is a flowchart of a method for receiving recommended program information using a digital set-top box according to an exemplary embodiment of the present invention;
Fig. 8 illustrates recommended program information being displayed according to an exemplary embodiment of the present invention; and
Fig. 9 illustrates recommended program information being displayed according to an exemplary embodiment of the present invention.

An apparatus and a method for sharing recommended programs using digital set-top boxes according to illustrative, non-limiting embodiments of the present invention are described in detail with reference to the accompanying drawings.

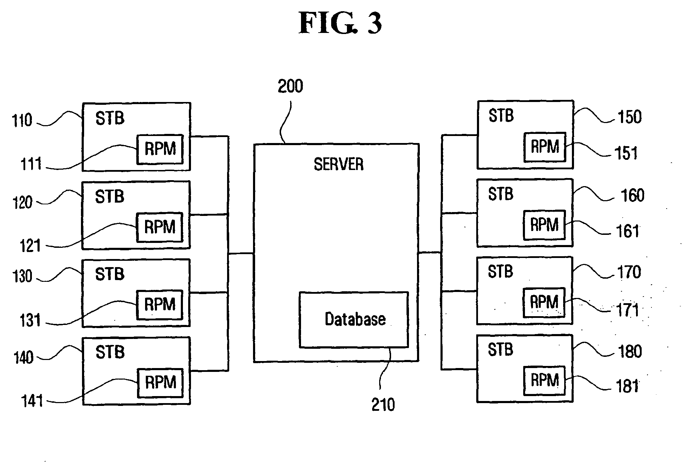

Referring to Fig. 3, the apparatus for sharing recommended program information according to an exemplary embodiment of the present invention includes a plurality of set-top boxes (labeled "STB") 110, 120, 130, 140, 150, 160, 170, and 180 which perform transmission and reception of recommended programs, and a server 200 which is connected with the plurality of set-top boxes 110, 120, 130, 140, 150, 160, 170, and 180 through a network and generates a set-top box list including the plurality of set-top boxes 110, 120, 130, 140, 150, 160, 170, and 180. Each of the plurality of set-top boxes 110, 120, 130, 140, 150, 160, 170, and 180 may receive recommended program information transmitted from different set-top boxes and also may transmit recommended program information to desired set-top boxes. The plurality of set-top boxes 110, 120, 130, 140, 150, 160, 170, and 180 may include Recommendation Program Managers (labeled "RPMs") 111, 121, 131, 141, 151, 161, 171, and 181, as shown in Fig. 3. The RPMs manage general operations related to transmission and reception of recommended program information.

The server 200 generates a set-top box list including the plurality of set-top boxes 110, 120, 130, 140, 150, 160, 170, and 180, and the set-top box list includes unique information on each set-top box. The unique information may include a unique ID which the server 200 assigns or provides and/or a unique ID which cable, satellite, or public wave broadcasting providers assign or provide to each of the plurality of set-top boxes 110, 120, 130, 140, 150, 160, 170, and 180 provided with broadcasting services.

The server 200 transmits the set-top box list to the plurality of set-top boxes 110, 120, 130, 140, 150, 160, 170, and 180, and the plurality of set-top boxes 110, 120, 130, 140, 150, 160, 170, and 180 receive the set-top box list and display the set-top box list whenever requested by the user.

Using the set-top box list, a set-top box to which recommended program information is to be transmitted is selected by the user, and the recommended program information is transmitted to the selected set-top box. Recommended program information may include a still cut from the recommended program and/or additional information to make it possible to identify the set-top box which has transmitted the recommended program information. Such additional information may include a unique ID corresponding to each set-top box, a user's name, a user's photograph and/or an avatar. Thus, a set-top box user, who has received the recommended program information can easily identify the set-top box which transmitted the recommended program information. Also, the additional information may include a desired message input by the set-top box user who transmits the recommended program information.

Optionally, recommended program information can be transmitted and received not only among the plurality of set-top boxes 110, 120, 130, 140, 150, 160, 170, and 180 with one another directly, but also through the server 200. Recommended program information transmitted by an arbitrary set-top box can be transmitted to other set-top boxes directly, or can be transmitted to the server 200 to be transmitted to another set-top box from the server 200. Also, the server 200 may include a database 210 to store recommended program information and calculate a recommended frequency for each program using the recommended program information stored in the database 210. In such case, the server 200 then generates separate recommended program information on the basis of the recommended frequency. The set-top box receiving the recommended program information can receive not only recommended program information generated by an arbitrary or chosen set-top box but also the separate recommended program information generated by the server 200.

Optionally, the set-top box receiving the recommended program information may sort information on desired programs to be received so that too much recommended program information is not received, and on this basis receives the recommended program information from the arbitrary or chosen set-top box or the server 200 according to the sorting of the desired program information.

Operation of an apparatus for sharing recommended program information in accordance with an illustrative, non-limiting embodiment of the present invention will now be described.

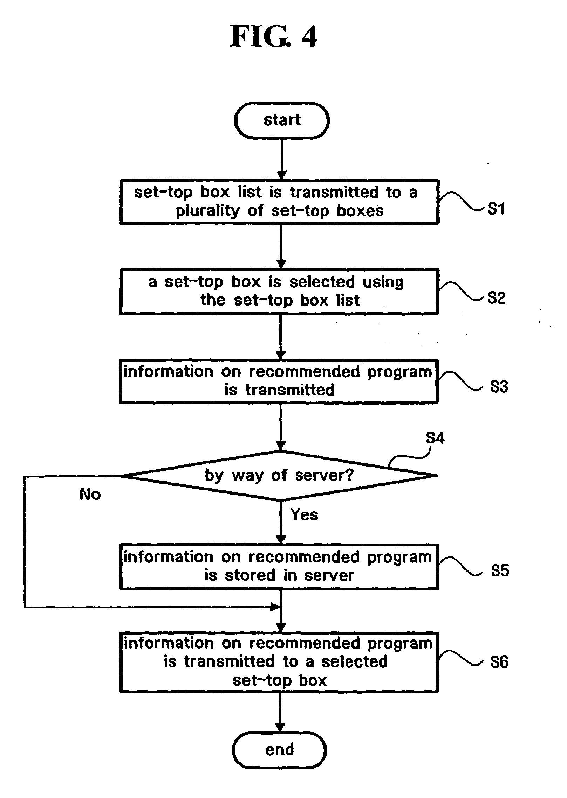

Referring to Fig. 4, a method for transmitting recommended program information in accordance with an illustrative, non-limiting embodiment of the present invention includes transmitting a set-top box list of a plurality of set-top boxes 110, 120, 130, 140, 150, 160, 170, and 180, which are connected with one another through a network via a server 200 to the plurality of set-top boxes (S1). Here, the set-top box list includes unique information of the plurality of set-top boxes 110, 120, 130, 140, 150, 160, 170 and 180 and of the server 200, both being connected to the network.

In a second step S2, an arbitrary or chosen set-top box selects a desired set-top box to which recommended program information is to be transmitted using the set-top box list previously transmitted.
In a third step S3, the recommended program information is transmitted to the selected set-top box. The recommended program information may include still cuts from the corresponding programs and additional information to identify the set-top box which has transmitted the recommended program information. Also, such additional information may include a unique ID to identify the set-top box, a user's name, a user's photograph, an avatar, and/or a desired message input by the user who transmitted the recommended program information.

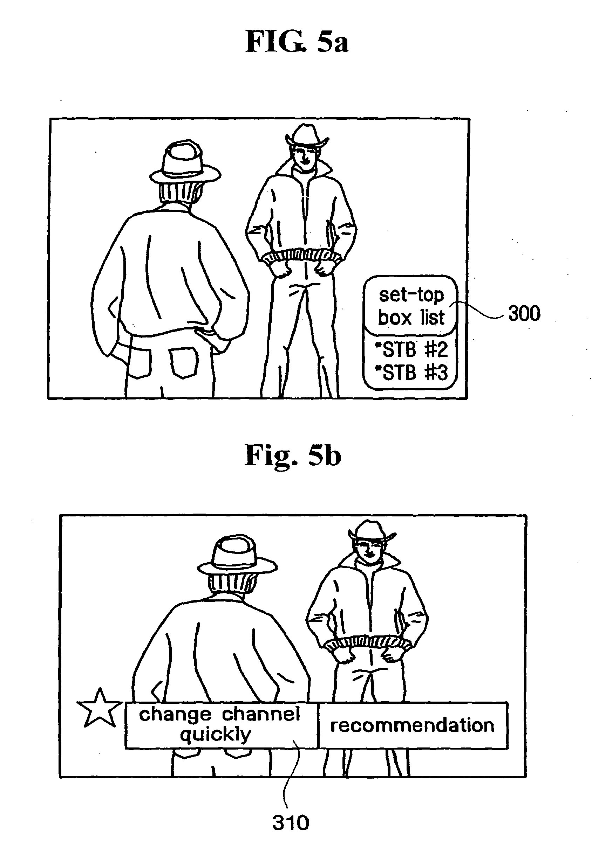

Referring to Fig. 5a, in an exemplary embodiment of the present invention, when a program which is being watched is recommended, an arbitrary set-top box can be selected by a user through a set-top box list 300 while the user is watching a program, and the recommended program information is then transmitted to the selected set-top box.

Also, referring to Fig. 5b, the set-top box user who is transmitting the recommended program information can input a desired message 310 to be transmitted together with the recommended program information.

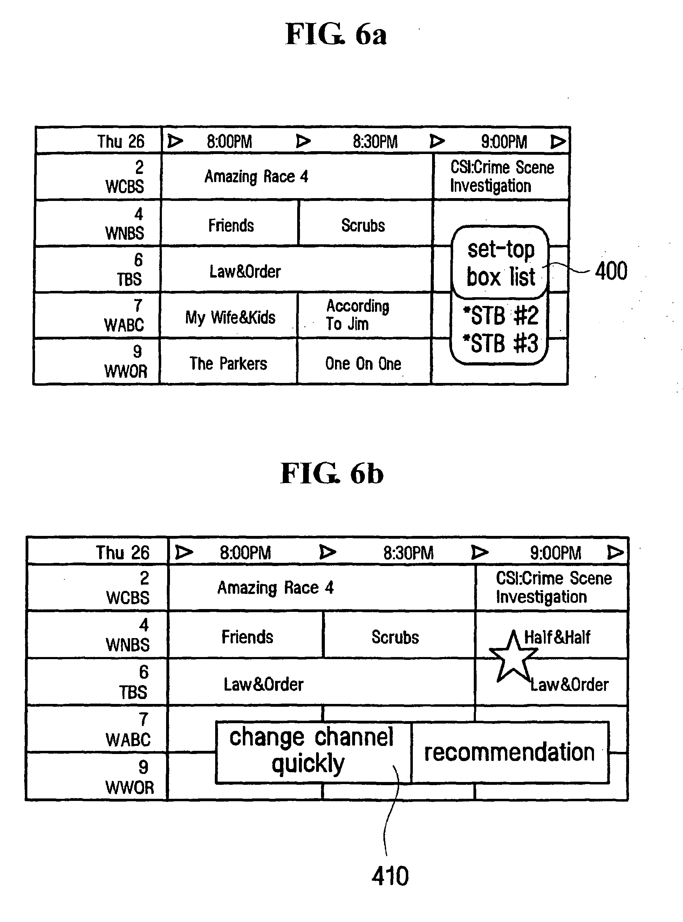

Also, as to transmission of recommended program information using an EPG, as shown in Fig. 6a, after an arbitrary program to recommend is selected using the EPG, an arbitrary set-top box is selected using a set-top box list 400. The recommended program information can then be transmitted to the selected set-top box.

Also, as shown in Fig. 6b, to the user may transmit a desired message 410 together with the recommended program information.

As shown in Fig. 4 in a fourth step S4, it is determined whether the recommended program information, which has been transmitted, is transmitted to the selected set-top box by way of the server 200.

In a fifth step S5, when the information on the recommended program, which has been transmitted, is transmitted by way of the server 200, the recommended program information which has been transmitted may be stored in the database 210 of the server 200.

In the fifth step S5, the server 200 may optionally calculate a recommended frequency for each program on the basis of the recommended program information which has been stored, and separate recommended program information may then be independently generated in accordance with the calculation results. The generated recommended program information may be helpful in obtaining information on various recommended programs from set-top boxes receiving recommended program information and may also be used effectively when there is no set-top box transmitting recommended program information.

In a sixth step S6, recommended program information stored in the server 200 may be transmitted to the selected set-top box from the server 200. However, when recommended program information is not transmitted by way of the server 200 as determined in the fourth step S4, the recommended program information is transmitted in S6 directly to the a selected set-top box from the sending set-top box.

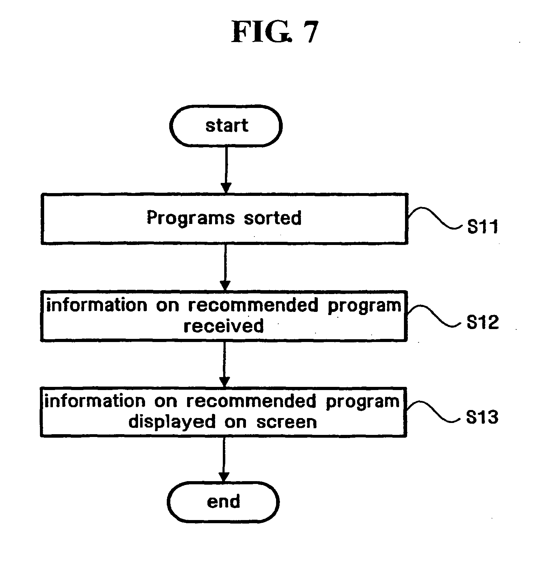

In Fig. 7, an illustrative, non-limiting method for receiving recommended program information by the receiving set-top box optionally includes an eleventh step S11 of sorting desired programs to be received. Too much information on the recommended programs might be received if the programs are not sorted. Also, the sorting process can reduce unnecessary time in searching for recommended program information which is required by a user. Also, when recommended program information is not required, it is possible for the receiving set-top box to interrupt the reception of recommended program information.

In a twelfth step S12, recommended program information in accordance with the desired program sorting is received. At this time, it is possible to receive recommended program information from an arbitrary set-top box directly or the recommended program information as separately generated by the server 200. The determination of such a source of the recommended program information which is received may optionally be chosen by the set-top box user receiving the recommended program information. In a thirteenth step S13, the recommended program information is displayed on the screen.

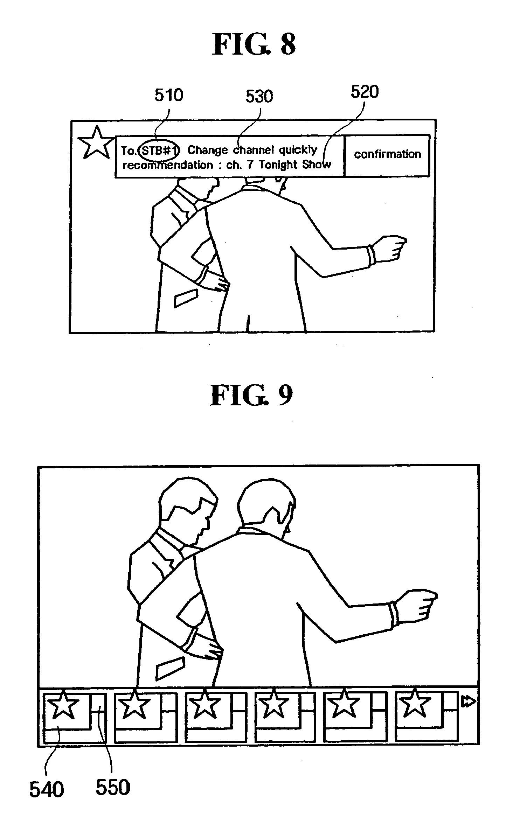

In an exemplary and non-limiting embodiment of the present invention, when the recommended program information is about a current broadcasting program, a unique ID 510 of the set-top box which has transmitted the recommended program information, program information 520, and/or a desired message 530 input by the transmitting set-top box user are displayed, as shown in Fig. 8. Also, when the recommended program information is not a current broadcasting program, a still cut 540 from the recommended program and/or an avatar 550 to identify the set-top box having transmitted the recommended program information may be displayed on the screen, as shown in Fig. 9.

Instead of an avatar, a unique ID, a user's name and/or a user's photograph from the transmitting set-top box may be displayed instead of the avatar. Accordingly, it is possible to perform reservation recording and alarm reservation through the still cut 540 and the avatar 550. Although the exemplary embodiments of the present invention have been disclosed for illustrative purposes, those skilled in the art appreciate that various modifications, additions and/or substitutions are possible, without departing from the scope of the invention as defined by the accompanying claims.

In accordance with preferred embodiments of the present invention, an effect may be obtained that recommended program information can be provided, which is more fitted with a user's taste by making a community among a plurality of set-top boxes and then recommending programs among the plurality of set-top boxes with one another through a desired network.

## Claims

1. An apparatus for sharing recommended programs, comprising:
a transmission-side set-top box (120, ..., 180) which transmits recommended program information pertaining to broadcast programs;
a server (200) connected to a plurality of set-top boxes (110, ..., 180) through a network to store the recommended program information transmitted from the transmission-side set-top box (120,..., 180); and
a reception side set-top box (110) which is configured to receive the recommended program information stored in the server (200) and displays the recommended program information on a screen; **characterised in that**
the server (200) generates a set-top box list (300, 400) including a plurality of set-top boxes (110, ..., 180) connected with one another through a network and transmits the list (300, 400) to the plurality of set-top boxes (110, ..., 180); wherein
the server (200) calculates a recommended frequency for each program using the recommended program information, and generates additional recommended program information in accordance with the calculated results; and wherein
the reception-side set-top box sorts programs to be received, and the server (200) transmits the recommended program information matched to the sorting.

2. The apparatus according to claim 1, wherein the recommended program information includes still cuts (540) of the broadcast programs to be recommended and additional information (550) to identify the transmission-side set-top box (120, ..., 180).

3. The apparatus according to claims 1 or 2, wherein the transmission-side set-top box (120, ..., 180) selects at least one of the plurality of set-top boxes (110) to transmit the recommended program information to using the set-top box list (300, 400).

4. The apparatus according to claim 3, wherein the server transmits information on the sorted programs to the transmission-side set-top box, and the transmission-side set-top box transmits the recommended program information matched to the sorting to the reception-side set-top box.

5. The apparatus according to any preceding claim, wherein the plurality of set-top boxes (110, ..., 180) are configured to provide recommended program information to a screen, with each set-top box being associated with a screen.

6. The apparatus according to any preceding claim, wherein the set-top box (110, ..., 180) is a digital set-top box.

7. A method for sharing recommended program information, comprising:
transmitting the recommended program information to a set-top box (110); and
storing the recommended program information which has been transmitted; and
receiving the recommended program information which has been stored and displaying the received recommended program information on a screen **characterised in that**
receiving a set-top box list (300, 400) including a plurality of set-top boxes (110, ..., 180) connected with one another through a network; and
selecting a desired receiving set-top box (110) using the set-top box list (300, 400); and wherein
storing recommended program information includes calculating a recommended frequency for each program using the recommended program information and generating separate recommended program information in accordance with the calculated results; and wherein
receiving recommended program information includes sorting programs to be received.

8. The method according to claim 7, wherein the recommended program information includes at least one of a still cut (540) from a corresponding program and additional information (550) used to identify a transmitting set-top box.

## Patentansprüche

1. Vorrichtung zum Verteilen von Programmempfehlungen, umfassend:
eine Sendeseiten-Set-Top-Box (120, ..., 180), die Programmempfehlungsinformationen in Bezug auf Sendeprogramme sendet,
einen Server (200), durch ein Netzwerk an eine Vielzahl von Set-Top-Boxen (110, ..., 180) angeschlossen, um die von der Sendeseiten-Set-Top-Box (120, ..., 180) gesendeten Programmempfehlungsinformationen zu speichern, und
eine Empfangsseiten-Set-Top-Box (110), die konfiguriert ist, um die in dem Server (200) gespeicherten Programmempfehlungsinformationen zu empfangen, und die die Programmempfehlungsinformationen auf einem Bildschirm anzeigt,
**dadurch gekennzeichnet, dass**
der Server (200) eine Set-Top-Boxen-Liste (300, 400) erzeugt, die eine Vielzahl von Set-Top-Boxen (110, ..., 180) enthält, die durch ein Netzwerk miteinander verbunden sind, und die Liste (300, 400) zu der Vielzahl von Set-Top-Boxen (110, ..., 180) sendet, wobei
der Server (200) mit Hilfe der Programmempfehlungsinformationen eine empfohlene Frequenz für jedes Programm berechnet und in Übereinstimmung mit den Berechnungsergebnissen zusätzliche Programmempfehlungsinformationen erzeugt und wobei
die Sendeseiten-Set-Top-Box zu empfangende Programme sortiert und der Server (200) die Programmempfehlungsinformationen an die Sortierung angepasst sendet.

2. Vorrichtung nach Anspruch 1, wobei die Programmempfehlungsinformationen Standbildausschnitte (540) der zu empfehlenden Sendeprogramme und Zusatzinformation (550) zum Identifizieren der Sendeseiten-Set-Top-Box (120, ..., 180) enthält.

3. Vorrichtung nach Anspruch 1 oder 2, wobei die Sendeseiten-Set-Top-Box (120, ..., 180) mit Hilfe der Set-Top-Boxen-Liste (300, 400) wenigstens eine aus der Vielzahl von Set-Top-Boxen (110) auswählt, um die Programmempfehlungsinformationen zu dieser zu senden.

4. Vorrichtung nach Anspruch 3, wobei der Server Informationen über die sortierten Programme zu der Sendeseiten-Set-Top-Box sendet und die Sendeseiten-Set-Top-Box die Programmempfehlungsinformationen, angepasst an die Sortierung, zu der Empfangsseiten-Set-Top-Box sendet.

5. Vorrichtung nach einem der vorhergehenden Ansprüche, wobei die Vielzahl von Set-Top-Boxen (110, ..., 180) konfiguriert ist, um Programmempfehlungsinformationen an einen Bildschirm bereitzustellen, wobei jede Set-Top-Box mit einem Bildschirm verbunden ist.

6. Vorrichtung nach einem der vorhergehenden Ansprüche, wobei die Set-Top-Box (110, ..., 180) eine digitale Set-Top-Box ist.

7. Verfahren zum Verteilen von Programmempfehlungsinformationen, umfassend:
Senden der Programmempfehlungsinformationen zu einer Set-Top-Box (110),
Speichern der Programmempfehlungsinformationen, die gesendet worden sind, und
Empfangen der Programmempfehlungsinformationen, die gespeichert worden sind, und Anzeigen der empfangenen Programmempfehlungsinformationen auf einem Bildschirm, **gekennzeichnet durch**
Empfangen einer Set-Top-Boxen-Liste (300, 400), die eine Vielzahl von Set-Top-Boxen (110, ..., 180) enthält, die **durch** ein Netzwerk miteinander verbunden sind, und
Auswählen einer erwünschten Empfangs-Set-Top-Box (110) mit Hilfe der Set-Top-Boxen-Liste (300, 400), wobei
Speichern von Programmempfehlungsinformationen das Berechnen einer empfohlenen Frequenz für jedes Programm mit Hilfe der Programmempfehlungsinformationen und Erzeugen von separaten Programmempfehlungsinformationen entsprechend den Berechnungsergebnissen beinhaltet und wobei
Empfangen von Programmempfehlungsinformationen das Sortieren zu empfangender Programme beinhaltet.

8. Verfahren nach Anspruch 7, wobei die Programmempfehlungsinformationen wenigstens eines von einem Standbildausschnitt (540) aus einem entsprechenden Programm und Zusatzinformation (550), die verwendet wird, um eine Sende-Set-Top-Box zu identifizieren, enthalten.

## Revendications

1. Dispositif pour partager des programmes recommandés, comportant :
un boîtier décodeur côté transmission (120, ..., 180) qui transmet des informations de programmes recommandés appartenant à des programmes de diffusion,
un serveur (200) connecté à une pluralité de boîtiers décodeurs (110, ..., 180) via un réseau pour mémoriser les informations de programmes recommandés transmises depuis le boîtier décodeur côté transmission (120, ..., 180), et
un boîtier décodeur côté réception (110) qui est configuré pour recevoir les informations de programmes recommandés mémorisées dans le serveur (200) et affiche les informations de programmes recommandés sur un écran, **caractérisé en ce que**
le serveur (200) génère une liste de boîtiers décodeurs (300, 400) incluant une pluralité de boîtiers décodeurs (110, ..., 180) mutuellement connectés via un réseau et transmet la liste (300, 400) à la pluralité de boîtiers décodeurs (110, ..., 180), dans lequel
le serveur (200) calcule une fréquence recommandée pour chaque programme en utilisant les informations de programmes recommandés, et génère des informations de programmes recommandés supplémentaires conformément aux résultats calculés, et dans lequel
le boîtier décodeur côté réception trie des programmes à recevoir, et le serveur (200) transmet les informations de programmes recommandés qui correspondent au tri.

2. Dispositif selon la revendication 1, dans lequel les informations de programmes recommandés comportent des coupures fixes (540) des programmes de diffusion à recommander et des informations supplémentaires (550) pour identifier le boîtier décodeur côté transmission (120, ..., 180).

3. Dispositif selon les revendications 1 ou 2, dans lequel le boîtier décodeur côté transmission (120, ..., 180) sélectionne au moins un boîtier décodeur parmi la pluralité de boîtiers décodeurs (110) pour transmettre les informations de programmes recommandés en utilisant la liste de boîtiers décodeurs (300, 400).

4. Dispositif selon la revendication 3, dans lequel le serveur transmet des informations sur les programmes triés au boîtier décodeur côté transmission, et le boîtier décodeur côté transmission transmet les informations de programmes recommandés qui correspondent au tri au boîtier décodeur côté réception.

5. Dispositif selon l'une quelconque des revendications précédentes, dans lequel la pluralité de boîtiers décodeur (110, ..., 180) sont configurés pour délivrer des informations de programmes recommandés à un écran, chaque boîtier décodeur étant associé à un écran.

6. Dispositif selon l'une quelconque des revendications précédentes, dans lequel le boîtier décodeur (110, ..., 180) est un boîtier décodeur numérique.

7. Procédé pour partager des informations de programmes recommandés, comportant les étapes consistant à :
transmettre les informations de programmes recommandés à un boîtier décodeur (110), et
mémoriser les informations de programmes recommandés qui ont été transmises, et
recevoir les informations de programmes recommandés qui ont été mémorisées et afficher les informations de programmes recommandés reçues sur un écran, **caractérisé par** les étapes consistant à
recevoir une liste de boîtiers décodeurs (300, 400) incluant une pluralité de boîtiers décodeurs (110, ..., 180) mutuellement connectés via un réseau, et
sélectionner un boîtier décodeur de réception voulu (110) en utilisant la liste de boîtiers décodeurs (300, 400), et dans lequel
la mémorisation des informations de programmes recommandés comporte le calcul d'une fréquence recommandée pour chaque programme en utilisant les informations de programmes recommandés et la génération d'informations de programmes recommandés séparées conformément aux résultats calculés, et dans lequel
la réception des informations de programmes recommandés comporte le tri des programmes à recevoir.

8. Procédé selon la revendication 7, dans lequel les informations de programmes recommandés comportent au moins l'une parmi une coupure fixe (540) d'un programme correspondant et des informations supplémentaires (550) utilisées pour identifier un boîtier décodeur de transmission.
